# EUROPEAN PATENT SPECIFICATION

(11) **EP 4 290 109 B1**
(45) Date of publication and mention of the grant of the patent: **22.10.2025**
(21) Application number: 22177835.0
(22) Date of filing: 08.06.2022
(51) Int. Cl.: F16L 37/00

(54) **A DECOUPLING MECHANISM**
ENTKOPPLUNGSMECHANISMUS
MÉCANISME DE DÉCOUPLAGE

(43) Date of publication of application: 13.12.2023
(73) Proprietor: Husqvarna AB, 561 82 Huskvarna (SE)
(72) Inventor: Schlegel, Tobias, 89171 Illerkirchberg (DE); Kramer, Anna, 89284 Pfaffenhofen an der Roth (DE)
(74) Representative: Finkele, Rolf

(56) References cited:
- CH-A- 406 973
- US-B1- 6 431 475

## Description

### TECHNICAL FIELD

The present disclosure relates to a decoupling mechanism for decoupling a first component removably coupled with a second component. More specifically, the present disclosure relates to an easy and ergonomic decoupling mechanism for decoupling the first component and the second component removably coupled to each other for wide range of industrial and domestic applications.

### BACKGROUND

Many-a-times, a coupling between a pair of components is desired, for example, to establish a secure fluid connection between the pair of components. Such couplings are generally removable couplings, for example between a pair of hoses, a water socket and a hose, and a water socket and a hose connector. These couplings may be above ground, or partly underground at times. Traditionally, many mechanisms have been formulated in the related field to decouple the removable couplings. However, the known mechanisms are cumbersome, involve complex set-up and are not ergonomic in different kinds of installments such as above ground, or partly underground installments.

CH 406 973 A (hereinafter referred to as '973 reference) discloses a pipe switch with a pressure seal, comprising a movable pipe section that can be brought into connection with various openings. The pipe switch comprises a sealing ring which is slidably arranged on the movable pipe section, and a knee lever system for pressing the metal ring and hence the sealing ring onto the circumference of the respective opening. The knee lever system comprises two tabs and a bracket lever. The two tabs engage the metal ring through bolts. The two tabs and the bracket lever are connected by bolts. Further, two bolts welded to the pipe section, are the pivot point of the bracket lever. A rotary lever is firmly connected to the bracket lever by respective screws. However, the pipe switch with a pressure seal as disclosed by the '973 reference is cumbersome, involves a complex set-up and is not ergonomic in an installment inside a house.

US 6,431,475 B1 (hereinafter referred to as '475 reference) discloses a fully automated land irrigation system. The irrigation system comprises a valve coupler which provides selective connection and disconnection along a series of access valves in an area to be watered. Upward and downward travel of the valve coupler is provided by an independent wheel lifter as part of the transporter. IN a fully lowered position, the transport wheels may be rolled along the ground surface as part of the transporter for transporting the valve coupler between successively connectable access valves. An upward rotation of transport wheel legs with transport wheels has the effect of lowering the coupler body to align and forcibly open the access valve. However, the irrigation system with valve coupler as disclosed by the '475 reference is cumbersome, involves a complex set-up and is not ergonomic in an above ground installment.

Thus, there is a need of an improved decoupling mechanism that may be user friendly for decoupling the pair of components installed in any installation condition such as discussed above.

### SUMMARY

In view of the above, it is an objective of the present invention to solve or at least reduce the drawbacks discussed above. The objective is at least partially achieved by a mechanism for decoupling a pair of components. The mechanism for decoupling a pair of components includes a first component, a second component operatively coupled with the first component, and a lever for decoupling the first component from the second component. The mechanism is characterized in that the lever activates a rocker arm mechanism to decouple the first component from the second component, with the lever exhibiting a translatory motion to decouple the first component from the second component. As the lever is a foot-operated lever and thus an operator may not be required to bend down to decouple the first component from the second component when the one of the first component and the second component may be embedded in the ground. The operator may simply press the lever with the foot to execute easy and ergonomic decoupling of the first component from the second component. An actuation of a release element decouples the coupling of the first component from the second component. The mechanism utilizes a release element, which upon actuation, pushes away the second component to separate or remove the coupling between the first component and the second component. The lever when pressed by the operator actuates the release element in a direction opposite to the translatory motion of the lever. For example, when the first component may be at least partly embedded in the ground and the second component may be coupled on top of the first component, the lever may be pressed towards the ground such that the release element may be actuated in the direction away from the ground to decouple the first component from the second component.

Thus, the present disclosure provides a simple, user-friendly, and ergonomic mechanism for decoupling the first component and the second component operatively coupled with the first component. The decoupling is executed simply by operatively pressing the lever. The decoupling mechanism involves the use of a commonly known rocker arm mechanism in a novel manner. The rocker arm mechanism is advantageously used to decouple the first component from the second component. The decoupling mechanism involving the rocker arm mechanism is usable in wide range of domestic as well as industrial applications involving decoupling of the components from one another.

The lever is operatively pressed in a longitudinal direction parallel to the direction of coupling of the first component and the second component to decouple the first component from the second component.

According to an embodiment of the present disclosure, the one of the first component and the second component may embedded in the ground. The mechanism for decoupling the first component and the second component may be particularly advantageous and ergonomic when one of the first component and the second component may be embedded in the ground.

According to an embodiment of the present disclosure, the one or more of the first component and the second component is a watering component. The first component and the second component may be coupled and decoupled for use with wide range of applications, such as but not limited to, watering. In some embodiments, the first component is a water socket, and the second component is a hose.

According to an embodiment of the present disclosure, the rocker arm mechanism includes an arm operatively coupled at one end with the lever and at other end with the release element. In some embodiments of the present disclosure, the arm is operatively coupled with the release element via a coupling rod. In each of the embodiments, the arm converts the translatory motion of the lever into the translatory motion of the release element. The arm pivots about an axis when the lever is operated by the operator. The arms functions as a rocker arm of the rocker arm mechanism such that it transfers the motions of the lever to the release element.

According to an embodiment of the present disclosure, the one end of the arm is operatively coupled to the lever and another end of the arm is freely disposed. In some embodiments, upon operation of the lever operatively coupled to the arm, the arm pivots about the axis such that free end of the arm engages with the release element to push the release element in a manner such that the release element unlocks the coupling between the first component and the second component.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a cross-sectional view of a decoupling mechanism, in accordance with an aspect of the present disclosure;
**FIG. 2** shows a perspective view of a water socket installed with a decoupling mechanism, in accordance with an aspect of the present disclosure;
**FIG. 3** shows a front view of a decoupling mechanism in a working state, in accordance with an aspect of the present disclosure; and
**FIG. 4** shows a front view of a decoupling mechanism in a free non-working state, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

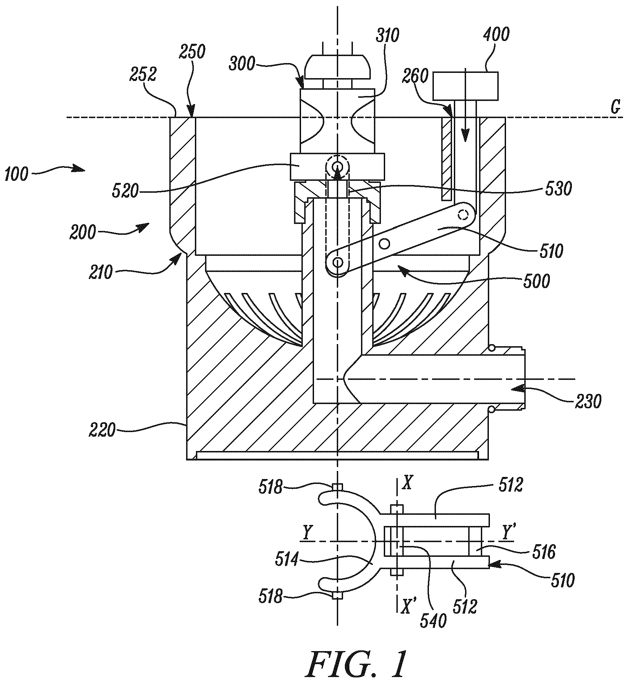

**FIG. 1** illustrates a mechanism **100** for decoupling a pair of components, namely a first component **200,** and a second component **300.** The first component **200** and the second component **300** are operatively coupled with one another. The first component **200** and the second component **300** may be any pair of similar or dissimilar components operatively and removably coupled to one another by any means known in the related art for wide range of domestic as well as industrial applications. However, for the purpose of understanding of the present disclosure, the one or more of the first component **200** and the second component **300** is a watering component such that one of the first component **200** and the second component **300** are embedded in the ground "G".

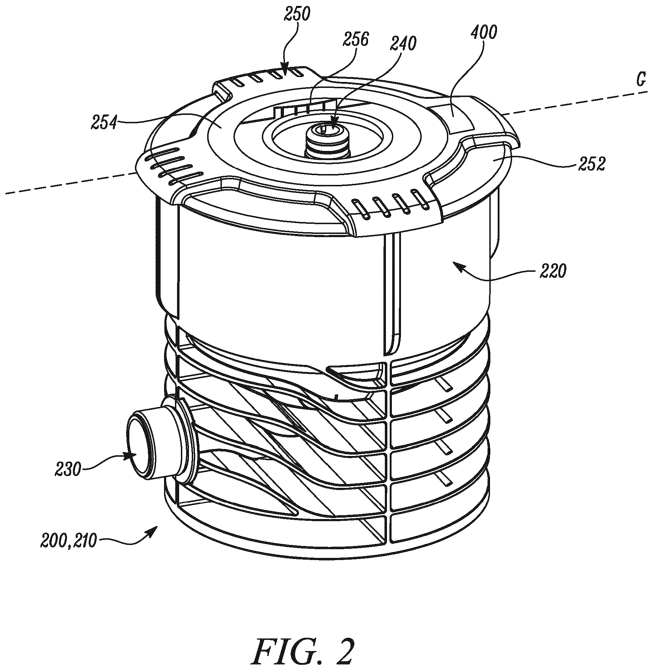

In some embodiments, the first component **200** is a water socket **210,** and the second component **300** is a hose (not shown). However, in the preferred embodiment of the present disclosure, the first component **200** is the water socket **210,** and the second component **300** is a hose connector **310.** The water socket **210** as shown in **FIGS. 1** and **2** is embedded in the ground "G" and allows discharge of water from a water source (not shown). The water socket **210** includes a body **220.** The body **220** of the present disclosure is cylindrical in shape. However, the body **220** may have any shape and size known in the art without limiting the scope of the present disclosure. The body **220** includes hollow spaces internally to fit-in various necessary accessories for operation of the water socket and other associated applications.

The body **220** includes a water inlet **230** for receiving water from the water source. The water inlet **230** may be fluidly coupled with the water source via a series of pipes (not shown) embedded in the ground "G". In some embodiments, the water source may be an underground water reservoir (not shown). However, the water source may be any other water source known in the art. Further, the water source may be housed above or below the ground "G" by any means known in the art.

The body **220** includes a coupling nipple **240.** The coupling nipple **240** and the water inlet **230** are internally connected by a network of pipes to discharge water received from the water source to the hose connected via the hose connector **310** for various industrial as well domestic applications, such as, but not limited to, gardening.

In some embodiments, the coupling nipple **240** may be designed in a manner such that when the coupling nipple **240** is fluidly coupled with the hose connector **310,** the coupling nipple **240** may allow the water from the water inlet **230** to flow towards the hose connector **310.** Furthermore, when the coupling nipple **240** is not fluidly coupled with the hose connector **310,** the coupling nipple **240** may disallow the water from the water inlet **230** to flow towards the hose connector **310.**

The body **220,** as shown in FIGS. **1** and **2****,** further includes an annular surface **250.** The annular surface **250** includes a housing ring **252** that form the top peripheral covering body for the water socket **210.** The annular surface **250** may further provide strength and stability to the body **220** of the water socket **210.** The annular surface **250** may be coupled to the body **220** by any means known in the related art without limiting the scope of the present disclosure in any manner. The annular surface **250** further includes a rim **254.** The rim **254** includes a fixed or removable cap **256** that may prevent entry of foreign elements, such as, but not limited to, dirt and dust inside the body **220** when the water socket **210** is not coupled to the hose connector **310.**

With continued reference to **FIGS. 1** and **2****,** the mechanism **100** includes a lever **400.** The lever **400** exhibits a translatory or rotary motion to decouple the first component **200** (or the water socket **210**) from the second component **300** (or the hose connector **310**). However, for the purpose of demonstration of the present disclosure, the lever **400** exhibits the translatory motion. The translatory lever **400** is particularly novel and advantageous when the water socket **210** is embedded in the ground "G". However, the motion of the lever **400** is not restricted to translatory or rotary in any manner and the lever **400** may exhibit any other type of motion without posing any limitation to the present disclosure.

The lever **400** may be a foot-operated lever and thus an operator may not be required to bend down to decouple the first component **200** (or the water socket **210**) from the second component **300** (or the hose connector **310**) when the first component **200** (or the water socket **210**) is embedded in the ground. The operator may simply press the lever **400** with the foot to execute easy and ergonomic decoupling of the water socket **210** from the hose connector **310.** Further, the translatory motion of the lever **400** allows lever to be at least partly embedded in the ground "G" and does not occupy much space above the ground "G" which could lead to injuries and accidents if the operator inadvertently bumps into the lever **400.**

The lever **400,** as show in **FIGS. 1** and **2** is cylindrical in shape and is housed in a cylindrical channel **260** formed in the longitudinal direction of the body **220.** The opening of the channel **260** for insertion of the lever **400** is defined on the annular surface **250.** In the preferred embodiment, the lever **400** includes a bulged portion that remains outside the channel **260** in a direction away from the ground "G" or the water socket **210.** The bulged portion may allow for proper gripping of the lever **400** by the operator during operation of the lever **400.**

The material of the lever **400** may be such that it may be able to absorb the force of the operator's foot, or any other actuating tool during the actuation of the lever **400.** Further, the channel **260** may be formed from the material such as to prevent or minimize friction between the channel **260** and the lever **400** during translation of the lever **400** in the channel **260.** The prevention or minimization of the friction may delay the wear of the respective surfaces of the lever **400** and the channel **260** and may further improve the service or working life of the lever **400** and the channel **260.** In some embodiments, the diameter of the lever **400** may be marginally less than the diameter of the channel **260** to prevent wear and frictional contact between the lever **400** and the channel **260.**

The actuation or operation of the lever **400** activates a rocker arm mechanism **500** to decouple the first component **200** (or the water socket **210**) from the second component **300** (or the hose connector **310**). An arrangement of the lever **400** with the rocker arm mechanism **500** to decouple the first component **200** (or the water socket **210**) from the second component **300** (or the hose connector **310**) is relatively simple, ergonomic, and user-friendly solution over other solutions widely used in the related art. The rocker arm mechanism **500** is mounted within the body **220** of the water socket **210** (or the first component **200**).

The rocker arm mechanism **500** includes an arm **510** operatively coupled with a release element **520** via coupling rod **530.** The coupling rod **530** may be one two coupling rods **530** as per the application requirements. The arm **510** is configured to convert the translatory motion of the lever **400** into the translatory motion of the release element **520.** The release element **520** is configured to decouple the first component **200** (or the water socket **210**) from the second component **300** (or the hose connector **310**) when the release element **520** is actuated by the arm **510** which is actuated by the lever **400.** In other words, the release element **520** is actuated by the lever **400.** The lever **400** when pressed by the operator towards the ground "G" actuates the release element **520** in the direction opposite to the translatory motion of the lever **400** i.e., away from the ground "G".

The lever **400** upon actuation or during operation transfers its motion to the arm **510.** The arm **510** further transfers its motion to the release element **520** via the coupling rod **530.** The release element **520** upon actuation pushes away the second component **300** (or the hose connector **310**) to separate or remove the coupling between the first component **200** (or the water socket **210**) and the second component **300** (or the hose connector **310**). The release element **520** functions as a movable sleeve which upon movement towards the second component **300** (or the hose connector **310**) pushes the second component **300** (or the hose connector **310**) away from the first component **200** (or the water socket **210**). The release element **520** is particularly advantageous for decoupling the second component **300** (or the hose connector **310**) from the first component **200** (or the water socket **210**) buried in the ground "G".

The water socket **210** buried in the ground "G" and removably coupled to the hose connector **310** for various watering applications is easily and ergonomically decoupled by the pushing force of the release element **520** after usage. The pushing force of the release element **520** upon actuation of the lever **400** unlocks the coupling between the water socket **210** and the hose connector **310.** The pushing force may be such that the hose connector **310** is just marginally pushed for uncoupling and may not be thrown far away on the ground "G".

The arm **510** transfers the translatory motion of the lever **400** to the coupling rod **530** and the release element **520** by exhibiting a rotary motion. The arm **510** pivots about an axis X-X' when the lever **400** is operated by the operator. The arms **510** functions as a rocker arm of the rocker arm mechanism **500** such that it transfers the motion of the lever **400** to the release element **520.** The axis X-X' may pass along the length of the arm **510** at any point (or area) as per the application requirements. A bearing **540** passes through the axis X-X' of the arm **510.** The bearing **540** passes through the body of the arm **510** such that the arm **510** pivots about the bearing **540.** The bearing **540** is positioned laterally with respect to the body of the arm **510.**

The arm **510** as shown in **FIG. 1** resembles a fork. The arm **510** includes two legs **512** arranged at a distance from each other and parallel to each other. Further, one end of each of the two legs **512** is coupled with a semi-circular body **514** to complete the fork shape of the arm **512.** The arm **510** is symmetric about an axis Y-Y'. The axis Y-Y' is perpendicular to the axis X-X'. The axis Y-Y' is along the longitudinal direction of the arm **510** whereas the axis X-X' is along the lateral direction of the arm **510.** The arm **510** includes a pin **516** proximate to its free end. The pin **516** is removably coupled to the two legs **512** of the arm **510.** The pin **516** is configured to pass through a through hole in the lever **400** such that the ends of the pin **516** may then be respectively coupled to the two legs **512.** The pin **516** allows the arm **510** to be operatively coupled to the lever **400.**

The semi-circular body **514** of the arm includes one protrusion **518** on each side such as to maintain symmetry along the Y-Y' axis. The protrusions **518** disposed on each side of the semi-circular body **514** or the arm **510** engage with the corresponding holes in the two coupling rods **530.** Thus, the arm **510** is operatively coupled at one end with the lever **400** and at the other end with the coupling rods **530.** The coupling rods **530** are then further coupled to the release element **520** in the same manner as the coupling between the coupling rods **530** and the arm **510.** The mechanical linkage between lever **400,** arm **510,** coupling rods **530** and the release element **520** helps in easy and user-friendly decoupling of the first component **200** (or the water socket **210**) from the second component **300** (or the hose connector **310**).

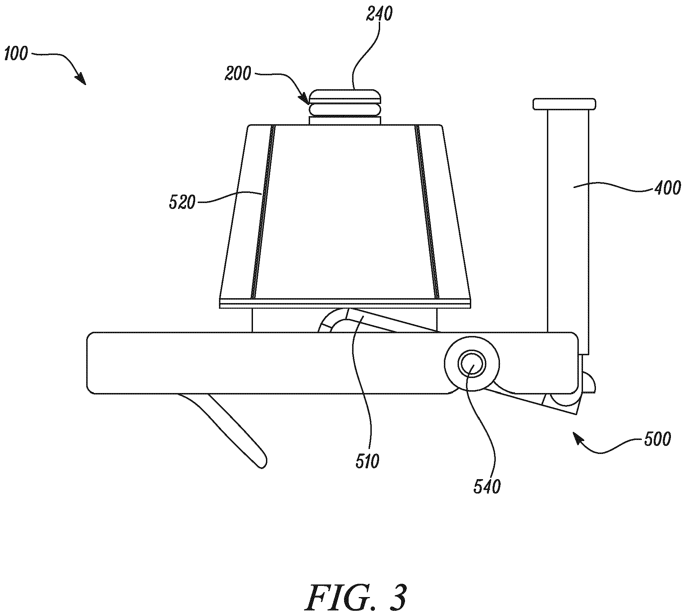

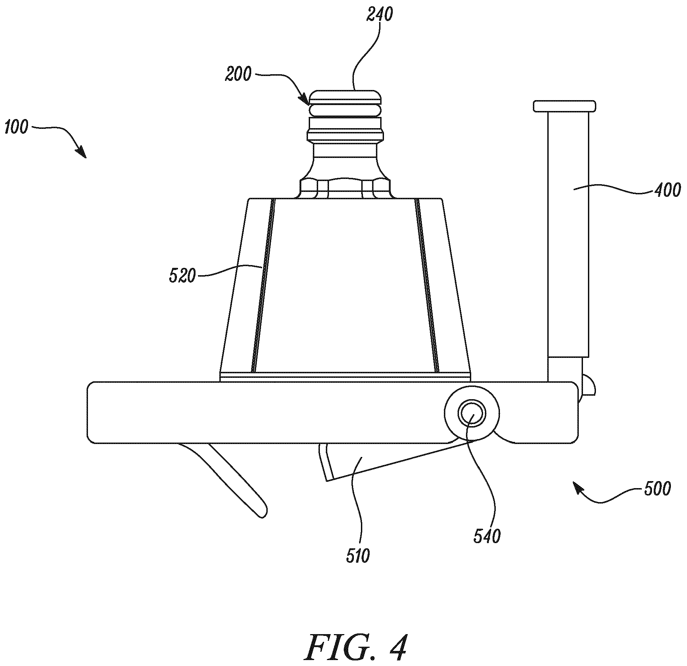

In some embodiments of the present disclosure, the arm **510** may directly be operatively coupled to the release element **520** without any coupling rod **530** acting as an interface between the arm **510** and the release element **520.** In other words, the arm **510** is operatively coupled at one end with the lever **400** and at other end with the release element **520.** Further, in some embodiments, as shown in **FIGS. 3** and **4****,** one end of the arm **510,** i.e., the semi-circular body 5**14** is free and not coupled with either the releasing ring **520** or the coupling rods **530.** The one end of the arm **510** is operatively coupled to the lever **400** and another end of the arm **510** is freely disposed. Upon operation of the lever **400** currently in the free state as shown in **FIG. 4****,** the arm **510** operatively coupled to the lever **400** pivots about the axis X-X' such that free end of the arm **510** engages with the release element **520** (as shown in **FIG. 3**) to push the release element **520** in a manner such that the release element **520** unlocks the coupling between the first component **200** (or the water socket **210**) and the second component **300** (or the hose connector **310**) (as shown in **FIG. 1**).

The arm **510** of the present disclosure is disclosed as having the fork shape. However, in actual implementation of the present disclosure, the arm **510** may have any other shape without limiting the scope of the present disclosure. Further, the release element **520** as shown in **FIGS. 3** and **4** has a dome shaped structure or a frustum like structure. The dome shaped or the frustum like structure of the release element **520** prevents the area near the coupling nipple **240** or the connection area between the first component **200** (or the water socket **210**) and the second component **300** (or the hose connector **310**) from accumulation of foreign elements such as, but not limited to, dust, dirt and the like for proper and secure engagement between the first component **200** (or the water socket **210**) and the second component **300** (or the hose connector **310**). In some embodiments, the release element **520** may have any other shape without limiting the utility or application area of the release element **520.**

Thus, the present disclosure provides a simple, user-friendly, and ergonomic mechanism **100** for decoupling the first component **200** and the second component **300** operatively coupled with the first component **200.** The decoupling is executed simply by operatively pressing the lever **400** in a longitudinal direction parallel to the direction of coupling of the first component **200** and the second component **300.** The decoupling mechanism **100** involves the use of a commonly known rocker arm mechanism **500** in a novel manner. The rocker arm mechanism **500** is advantageously used to decouple the first component **200** from the second component **300.** The decoupling mechanism **100** involving the rocker arm mechanism **500** is usable in wide range of domestic as well as industrial applications involving decoupling of the components from one another.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Mechanism
- **200**: First Component
- **210**: Water Socket
- **220**: Body
- **230**: Water Inlet
- **240**: Coupling Nipple
- **250**: Annular Surface
- **252**: Housing Ring
- **254**: Rim
- **256**: Cap
- **260**: Channel
- **300**: Second Component
- **310**: Hose Connector
- **400**: Lever
- **500**: Rocker Arm Mechanism
- **510**: Arm
- **512**: Legs
- **514**: Semi-circular Body
- **516**: Pin
- **518**: Protrusions
- **520**: Release Element
- **530**: Coupling Rod
- **540**: Bearing
- **G**: Ground
- **X-X'**: Axis
- **Y-Y**': Axis

## Claims

1. A mechanism **(100)** for decoupling a pair of components comprising:
a first component **(200);**
a second component **(300)** operatively coupled with the first component **(200);** and
a lever **(400)** for decoupling the first component **(200)** from the second component **(300),**
whereby the operation of the lever **(400)** activates a rocker arm mechanism **(500)** to decouple the first component **(200)** from the second component **(300);** wherein an actuation of a release element (520) decouples the coupling of the first component (200) from the second component (300);
**characterized in that:**
the lever **(400)** exhibits a translatory motion to decouple the first component **(200)** from the second component **(300),**
wherein the lever **(400)** is a foot-operated lever,
wherein the release element **(520)** is actuated by the lever **(400),**
and wherein the release element **(520)** is actuated in a direction opposite to the translatory motion of the lever **(400).**

2. The mechanism **(100)** of claim 1, wherein the one of the first component **(200)** and the second component **(300)** is embedded in the ground (G).

3. The mechanism **(100)** of claim 1, wherein the one or more of the first component **(200)** and the second component **(300)** is a watering component.

4. The mechanism **(100)** of claim 3, wherein the first component **(200)** is a water socket **(210),** and the second component **(300)** is a hose.

5. The mechanism **(100)** of any of the preceding claims, wherein the rocker arm mechanism **(500)** includes an arm **(510)** operatively coupled at an end with the lever **(400)** and at another end with the release element **(520).**

6. The mechanism **(100)** of claim 5, wherein the arm **(510)** is operatively coupled with the release element **(520)** via a coupling rod **(530).**

7. The mechanism **(100)** of claim 5, wherein the one end of the arm **(510)** is operatively coupled to the lever **(400)** and another end of the arm **(510)** is freely disposed.

8. The mechanism **(100)** of any of the claims 5-7, wherein the arm **(510)** is pivotable about an axis (X-X').

9. The mechanism **(100)** of any of the claims 5-8, wherein the arm **(510)** converts the translatory motion of the lever **(400)** into the translatory motion of the release element **(520).**

## Patentansprüche

1. Mechanismus **(100)** zum Entkoppeln eines Komponentenpaares, umfassend:
eine erste Komponente **(200);**
eine zweite Komponente **(300),** die mit der ersten Komponente **(200)** wirkgekoppelt ist; und
einen Hebel **(400)** zum Entkoppeln der ersten Komponente **(200)** von der zweiten Komponente **(300),**
wobei die Bedienung des Hebels **(400)** einen Kipphebelmechanismus **(500)** aktiviert, um die erste Komponente **(200)** von der zweiten Komponente **(300)** zu entkoppeln; wobei eine Betätigung eines Freigabeelements (520) die Kopplung der ersten Komponente (200) von der zweiten Komponente (300) entkoppelt;
**dadurch gekennzeichnet, dass:**
der Hebel **(400)** eine translatorische Bewegung zeigt, um die erste Komponente **(200)** von der zweiten Komponente **(300)** zu entkoppeln,
wobei der Hebel **(400)** ein fußbetätigter Hebel ist,
wobei das Freigabeelement **(520)** durch den Hebel **(400)** betätigt wird
und wobei das Freigabeelement **(520)** in eine Richtung entgegengesetzt zur Translationsbewegung des Hebels **(400)** betätigt wird.

2. Mechanismus **(100)** nach Anspruch 1, wobei die eine der ersten Komponente **(200)** und der zweiten Komponente **(300)** im Boden **(G)** eingebettet ist.

3. Mechanismus **(100)** nach Anspruch 1, wobei die eine oder mehrere der ersten Komponente **(200)** und der zweiten Komponente **(300)** eine Bewässerungskomponente ist.

4. Mechanismus **(100)** nach Anspruch 3, wobei die erste Komponente **(200)** ein Wasseranschluss **(210)** ist und die zweite Komponente **(300)** ein Schlauch ist.

5. Mechanismus **(100)** nach einem der vorstehenden Ansprüche, wobei der Kipphebelmechanismus **(500)** einen Arm **(510)** einschließt, der an einem Ende mit dem Hebel **(400)** und an einem anderen Ende mit dem Freigabeelement **(520)** wirkgekoppelt ist.

6. Mechanismus **(100)** nach Anspruch 5, wobei der Arm **(510)** mit dem Freigabeelement **(520)** über eine Koppelstange **(530)** wirkgekoppelt ist.

7. Mechanismus **(100)** nach Anspruch 5, wobei das eine Ende des Arms **(510)** mit dem Hebel **(400)** wirkgekoppelt ist und ein anderes Ende des Arms **(510)** frei angeordnet ist.

8. Mechanismus **(100)** nach einem der Ansprüche 5 bis 7, wobei der Arm **(510)** um eine Achse (X-X') schwenkbar ist.

9. Mechanismus **(100)** nach einem der Ansprüche 5 bis 8, wobei der Arm **(510)** die translatorische Bewegung des Hebels **(400)** in die translatorische Bewegung des Freigabeelements **(520)** umsetzt.

## Revendications

1. Mécanisme **(100)** de découplage d'une paire de composants comprenant :
un premier composant **(200)** ;
un seconde composant **(300)** accouplé de manière fonctionnelle au premier composant **(200)** ; et
un levier **(400)** destiné à découpler le premier composant **(200)** du second composant **(300),**
selon lequel l'actionnement du levier (**400)** active un mécanisme à bascule (**500)** destiné à découpler le premier composant (**200)** du second composant (**300)** ; dans lequel l'actionnement d'un élément de libération (520) découple l'accouplement du premier composant (200) du second composant (300) ;
**caractérisé en ce que** :
le levier (**400)** présente un mouvement de translation pour découpler le premier composant (**200)** du second composant (**300),**
dans lequel le levier (**400)** est un levier actionné par le pied,
dans lequel l'élément de libération (**520)** est actionné par le levier (**400),**
et dans lequel l'élément de libération (**520)** est actionné dans une direction opposée au mouvement de translation du levier (**400).**

2. Mécanisme (**100)** selon la revendication 1, dans lequel l'un du premier composant **(200)** et du second composant (**300)** est encastré dans le sol **(G).**

3. Mécanisme (**100)** selon la revendication 1, dans lequel l'un ou plusieurs du premier composant (**200)** et du second composant (**300)** est un composant d'arrosage.

4. Mécanisme (**100)** selon la revendication 3, dans lequel le premier composant (**200)** est une prise d'eau **(210),** et le second composant **(300)** est un tuyau.

5. Mécanisme (**100)** selon l'une quelconque des revendications précédentes, dans lequel le mécanisme à bascule (**500)** comporte un bras (**510)** couplé de manière fonctionnelle à une extrémité avec le levier (**400)** et à une autre extrémité avec l'élément de libération (**520).**

6. Mécanisme (**100)** selon la revendication 5, dans lequel le bras (**510)** est couplé de manière fonctionnelle à l'élément de libération (**520)** par l'intermédiaire d'une tige de couplage (**530).**

7. Mécanisme (**100)** selon la revendication 5, dans lequel l'une extrémité du bras (**510)** est couplée de manière fonctionnelle au levier (**400)** et une autre extrémité du bras (**510)** est libre.

8. Mécanisme (**100)** selon l'une quelconque des revendications 5 à 7, dans lequel le bras (**510)** peut pivoter autour d'un axe (X-X').

9. Mécanisme (**100)** selon l'une quelconque des revendications 5 à 8, dans lequel le bras (**510)** convertit le mouvement de translation du levier (**400)** en mouvement de translation de l'élément de libération (**520).**
